# EUROPEAN PATENT SPECIFICATION

(11) **EP 1 373 769 B1**
(45) Date of publication and mention of the grant of the patent: **10.08.2005**
(21) Application number: 02706940.0
(22) Date of filing: 27.03.2002
(51) Int. Cl.: F16K 15/14, B65D 83/16, B65D 83/14, B65D 47/20

(54) **VALVE**
VENTIL
SOUPAPE

(30) Priority: 29.03.2001 GB 0107858
(43) Date of publication of application: 02.01.2004
(73) Proprietor: Reckitt Benckiser (UK) LIMITED, Slough, Berkshire SL1 3UH (GB)
(72) Inventor: HAMMOND, Geoffrey R. Reckitt Benckiser (UK) Ltd, Hull HU8 7DS (GB)
(74) Representative: Bowers, Craig Malcolm
(86) International application number: PCT/GB2002/001187
(87) International publication number: WO 2002/079679

(56) References cited:
- US-A- 2 107 596
- US-A- 2 927 722
- US-A- 4 077 542
- US-A- 5 305 783
- US-A- 6 116 465

## Description

The present invention relates to a valve. The valve is particularly but not exclusively intended for use with a pressured or pressurisable container.

Manually operated finger or trigger sprays are commonly used to dispense household products such as hard surface cleaners. A problem with such sprays is that they can give a poor spray pattern if the consumer operates the spray at too low a pressure. Also they can dribble. A solution to these problems is sought.

Also sought is a device which can automatically generate a pulsed release from an aerosol container.

US-A-5305783 describes a one-way valve for dispensing a fluid material from a container which includes an axially extending valve body and an elastomeric sleeve stretched over the valve body in tightly fitting contact with it.

According to a first aspect of the present invention there is provided a valve comprising a valve body and a flexible member surrounding the valve body, the valve body defining an inlet and an outlet and means for enabling the inlet and outlet to communicate and the flexible member being displaceable under the action of pressure in the inlet from a position in which communication between inlet and outlet is prevented to a position in which communication between inlet and outlet is permitted.

In a preferred embodiment of the invention, the valve body may be moulded from synthetic plastics material or made from metal or any other suitable material.

The flexible member preferably comprises a sleeve advantageously made of rubber or synthetic plastics material. An elastomeric material is preferred. Its interior surface is preferably tacky so that it adheres to the valve body. This is a preferred feature because whilst the tackiness of the flexible member will increase the initial pressure required to displace the flexible member from the position in which communication between inlet and outlet is prevented to a position in which communication between inlet and outlet is permitted, the final pressure at which the flexible member returns to its original position is unchanged.

Suitably, the sleeve may be made of a material which requires more energy to deform/stretch it than the energy that the sleeve can exert through elasticity to return to its original position when the displacing force is removed.

Accordingly there will be a period of time during which gas or liquid can pass from the inlet to the outlet whilst the pressure drops from the initial pressure to the final pressure. Thus by careful selection of the material for the flexible membrane and/or by applying a tackifying coating to the interior surface of the member, the release characteristics of the valve can be selected.

In one embodiment a valve of the invention is employed in a pressurisable device, for example a trigger spray. The valve only opens once a threshold operating force has been applied and so releases a high quality spray, without dripping or dribbling.

In another embodiment a valve of the invention is employed in a pressurised device, for example a spray canister, and is arranged such that propellant bleeds into the valve, and intermittently trips the valve, without the agency of a user.

The means for enabling the inlet and outlet to communicate preferably comprises bores respectively connecting the inlet and outlet with the surface of the valve body. Optionally the valve includes more than one bore for either or both of the inlet and outlet.

Means are provided for retaining the flexible member on the valve body. These means preferably comprise annular formations on the valve body.

According to the invention there is further provided a device incorporating a valve as defined above. The device is optionally either pressurised, for example an aerosol, or pressurisable. In the latter case, the pressure in the device is generally generated manually (e.g. by a finger pump) or automatically (e.g. chemically or by a mechanical pump). In the former case the device preferably comprises a first chamber containing a pressurised liquid propellant and a second chamber containing liquid material to be issued from the device in dispersed form, wherein there is restricted communication between the chambers such that propellant may bleed into the second chamber. A valve according to the present invention is in communication with the second chamber and in use issues a pulse of the said material once the propellant has raised the pressure within the second chamber to a threshold level required to operate the valve.

In principle the dual-chamber device just described could be used with any precompression valve (by which we mean a valve which opens only once a given fluid pressure has been reached; and preferably which closes at a lower pressure); such a dual-chamber device with any precompression chamber constitutes a further aspect of the present invention.

The valve may be permanently attached to the device or may be coupled when the user replaces the pressurised/pressurisable unit as a refill.

In order that the invention may be more clearly understood, one embodiment thereof will now be described, by way of example, with reference to the accompanying drawings, in which:-
Figure 1 is a perspective view of part of one form of valve;
Figure 2 is a cross-sectional view of a valve including the part shown in Figure 1;
Figure 3 shows a first embodiment of aerosol device having a valve as shown in Figure 2; and
Figure 4 shows a second embodiment of aerosol device having a valve as shown in Figure 2.

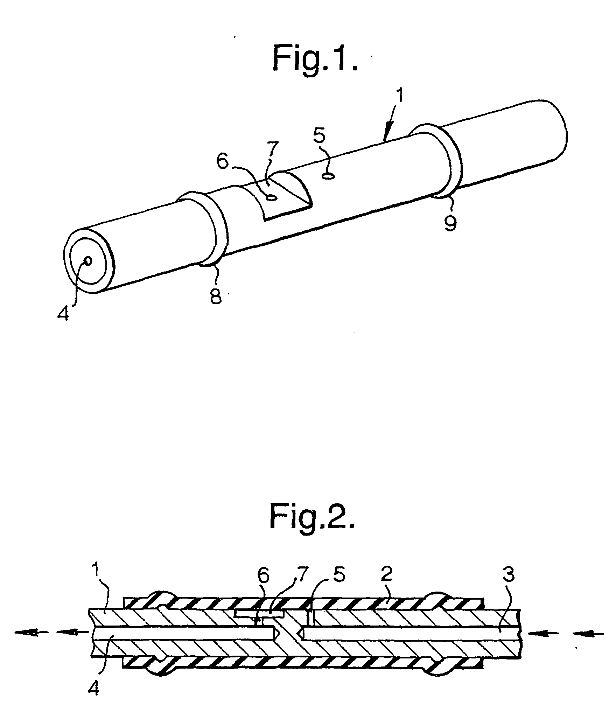

Referring to the figures, the valve comprises a substantially cylindrical valve body 1 and a flexible member 2 which is in the form of a sleeve over the valve body 1. The valve body 1 is injection moulded from synthetic plastics material, but may be made from metal or any other suitable material. The body defines centrally located and axially extending inlet 3 and outlet 4. The body 1 also defines a bore 5 which extends from the surface of the body 1 to the inlet 3, and a bore 6 which extends from the surface of the body to the outlet 4. At the point at which the bore 6 meets the body surface, a recess 7 is formed in the body surface. The recess may be of flat cut-out form as shown in Figure 1 or may be an annular recess extending around the whole or part of the circumference of body 1. Two annular formations 8 and 9 are extensions to the body surface disposed on opposite sides respectively of the recess 7 and bore 5.

The flexible member 2 is dimensioned to grip the body 1 with a close fit. The sleeve may be made of rubber, plasticised polyvinylchloride (pvc) or any other suitable material. The material has an adhesive property which provides an attractive force between the member 2 and body 1 when the two are in contact. Alternatively it may be made of a material which requires more energy to deform/stretch it than the energy that the sleeve can exert through elasticity to return to its original position when the displacing force is removed.

In use, with insufficient pressure in the inlet 3, the valve will be closed as shown in Figure 2. As the pressure increases in inlet 3, a value is reached which overcomes any attractive force between member 2 and body 1 and/or the force exerted by the elasticity of the sleeve and lifts the member 2 away from the body 1 allowing gas or fluid to flow into the recess 7 and from there via bore 6 to outlet 4. Flow will continue as long as the pressure of the fluid is sufficient to hold the member 2 away from the body 1. When the pressure falls to a value which is insufficient to hold the member 2 away from the body, the member will reseal against the body 1 thus closing off the flow between inlet 3 and outlet 4. The closing pressure will normally be less than the opening pressure where the aforementioned attractive force is present. The interaction of the member 2 on the formations 8 and 9 form respective seals opposing any tendency for fluid or gas to escape at opposite axial ends of the member 2. These formations act as retainers to prevent axial movement of the member 2 on the body 1 or leakage from the valve by any route other than by outlet 4 as a higher pressure will be needed to lift sleeve 2 away from formations 8 and 9 than will be needed to lift the sleeve to allow communication between bores 5 and 6. Alternatively, external clamps may be used to prevent leakage.

The valve may be used to control the output from a pressurised or pressurisable device. Pressure in the pressurisable device is generally either generated manually (e.g. by finger pump or a trigger pump) or automatically (e.g. by chemical means or by a mechanical pump). In both cases, once the valve threshold opening pressure is exceeded the valve will open to release a portion of the device's contents and close again once the pressure has fallen to the appropriate lower value.

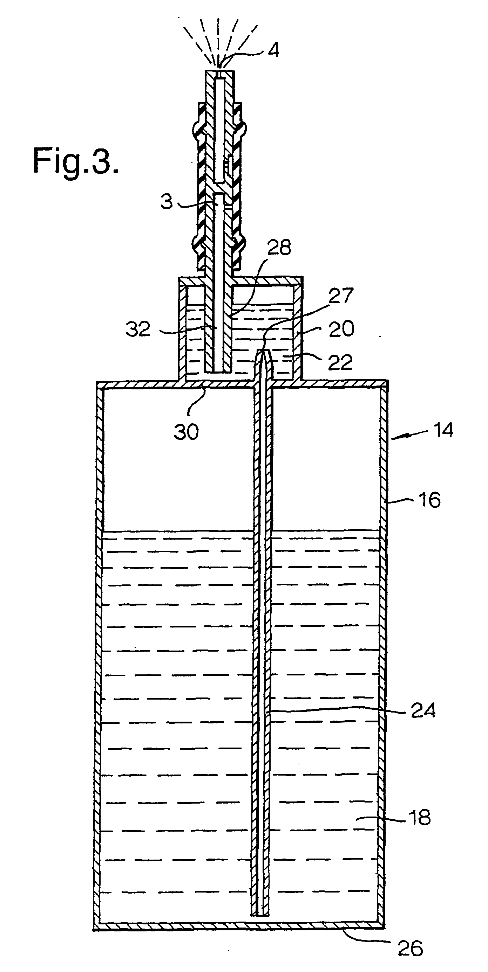

Figure 3 illustrates a pressurised device 14 incorporating a valve according to the invention. The device has a main chamber 16 containing a pressurised liquid propellant 18, and a smaller chamber 20 on top of the main chamber. The smaller chamber 20 contains an atomisable liquid 22, for example a fragrance. The only communication between the chambers is by means of an upright dip tube 24. The lower end of the dip tube is close to the bottom wall 26 of the main chamber. The upper end of the dip tube tapers to a pinhole 27. In an alternative embodiment the upper end of the dip tube may be closed by a gas-permeable liquid-impermeable membrane.

The smaller chamber has an outlet device in the form of the valve of Figures 1 and 2, arranged upright with the outlet 4 uppermost. It will be seen that the body 4 is formed as one piece with an upright tubular formation 28 within the smaller chamber and passing through the upper wall thereof. The bore 32 of the formation 28 communicates with the inlet 3 of the valve. The lower end of the formation 28 is close to the bottom wall 30 of the upper chamber.

In operation, the propellant in the main chamber bleeds into the smaller chamber via the dip tube 24 at a rate controlled by the dimensions of its pinhole outlet. Once the pressure in the smaller chamber is sufficient to operate the valve, liquid 22 from the chamber is released into the environment and then the valve closes. This process occurs repeatedly. Accordingly the device gives pulsed release of the liquid in the smaller chamber.

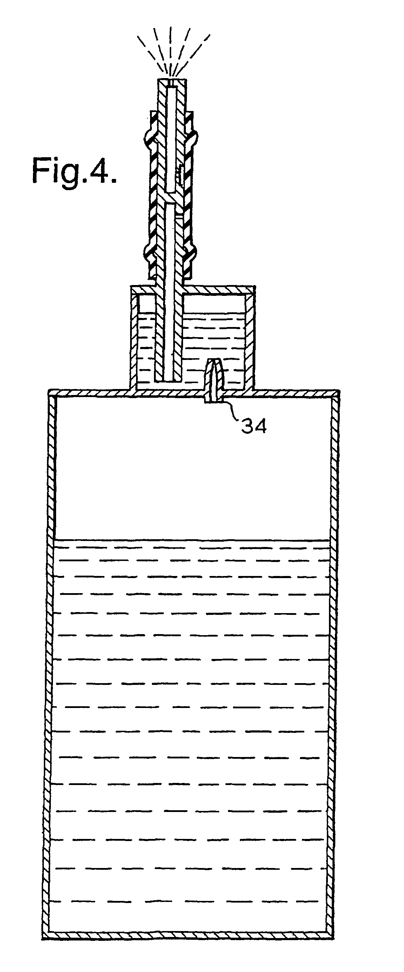

The embodiment of Figure 4 is similar to that of Figure 3 except there is no dip tube. Communication between the chamber is via a short tubular stub 34 whose lower end is in the upper region of the main chamber, in the headspace region of pressurised gas above the liquid propellant, and whose tapered upper end, closed by a gas-permeable liquid-impermeable membrane, is in the lower region of the upper chamber. Like the device of Figure 3 the Figure 4 device operates to give intermittent release of material, typically fragrance. One advantage of the Figure 4 arrangement is that its performance is substantially unaffected by changes in the liquid's viscosity.

It will be appreciated that the above embodiments have been described by way of example only and that many variations are possible without departing from the scope of the invention. In one variation, instead of a single bore 5, a plurality of circumferentially spaced bores may be provided to distribute pressure from the inlet passage 3 around the body 1 thus lifting the member 2 away from the body around the circumference rather than simply at one point.

In other embodiments the force required to operate the valve is supplied by a user. A weak force which might be expected to produce a dribble of liquid in prior devices does not produce any output. A moderate force opens the valve and the pressure is already sufficient to produce a good quality aerosol spray.

## Claims

1. A valve comprising a valve body (1) and a flexible member (2) surrounding the valve body, the valve body defining an inlet (3) and an outlet (4) and means for enabling the inlet (3) and outlet (4) to communicate and the flexible member (2) being displaceable under the action of pressure in the inlet (3) from a closed position in which communication between inlet (3) and outlet (4) is prevented to an open position in which communication between inlet (3) and outlet (4) is permitted, **characterised in that** the interior surface of the flexible member (2) is tacky so that it adheres to the valve body (1) so as to increase the force required to displace the flexible member (2) from the closed position to the open position, the force at which the flexible member (2) returns to its closed position being unchanged, and/or **in that** the flexible member (2) is constructed of a material which requires greater force to displace it from the closed position than the force that the flexible member (2) can exert through elasticity to return to its closed position when the displacing force is removed.

2. A valve as claimed in claim 1, in which the valve body (1) is moulded from synthetic plastics material or the valve body (1) is made from steel.

3. A valve as claimed in any one of the preceding claims in which the flexible member (2) comprises a sleeve, and the flexible member (2) is preferably made from rubber or from a synthetic plastics material.

4. A valve as claimed in any one of the preceding claims wherein the interior surface of the flexible member (2) is provided with a tackifying coating.

5. A valve as claimed in any one of the preceding claims, in which the means for enabling the inlet and outlet to communicate comprises bores respectively connecting the inlet (3) and outlet (4) with the surface of the valve body (1).

6. A valve as claimed in any one of the preceding claims, in which means (8, 9) are provided for retaining the flexible member (2) on the valve body (1), preferably the means comprising annular formations on the valve body (1).

7. A device incorporating a valve as claimed in any one of the preceding claims.

8. A device as claimed in claim 7, which is pressurisable, preferably wherein the pressure in the device is generated by means of a manual pump.

9. A device as claimed in claim 7 which has a pressurised container, preferably the device providing a pulsed release of the contents of the pressurised container.

10. A device (14) comprising a first chamber (16) containing a pressurised liquid propellant (18) and a second chamber (20) containing in liquid form a material (22) to be issued from the device in dispersed form, wherein there is restricted communication (24) between the chambers such that propellant may bleed into the second chamber, and wherein a valve (3) providing intermittent communication between the second chamber and the exterior of the device issues a pulse of the said material once the propellant has raised the pressure within the second chamber to a threshold level required to operate the valve **characterised in that** the valve is as claimed in any of claims 1 to 6.

## Patentansprüche

1. Ventil aufweisend einen Ventilkörper (1) und ein flexibles Element (2), welches den Ventilkörper umgibt, wobei der Ventilkörper einen Einlass (3) und einen Auslass (4) definiert, und Mittel zur Ermöglichung einer Verbindung von Einlass (3) und Auslass (4), und wobei das flexible Element (2) unter der Wirkung von Druck im Einlass (3) von einer geschlossenen Stellung, in welcher eine Verbindung zwischen dem Einlass (3) und dem Auslass (4) verhindert wird, in eine offene Stellung, in welcher eine Verbindung zwischen dem Einlass (3) und dem Auslass (4) ermöglicht wird, verstellbar ist, **dadurch gekennzeichnet, dass** die innere Oberfläche des flexiblen Elementes (2) klebrig ist, so dass sie an dem Ventilkörper (1) anhaftet, um so die Kraft zu erhöhen, die erforderlich ist, das flexible Element (2) von der geschlossenen Stellung in die offene Stellung zu verstellen, wobei die Kraft, bei welcher das flexible Element (2) in seine geschlossene Stellung zurückkehrt, unverändert ist, und/oder **dadurch** dass das flexible Element (2) aus einem Material konstruiert ist, welches eine größere Kraft zu seinem Verstellen aus der geschlossenen Stellung erfordert als die Kraft, die das flexible Element (2) durch die Elastizität ausüben kann, um in seine geschlossene Stellung zurückzukehren, wenn die Verstellkraft weggenommen wird.

2. Ventil nach Anspruch 1, in welchem der Ventilkörper (1) aus einem synthetischen Kunststoffmaterial gegossen ist, oder der Ventilkörper (1) aus Stahl hergestellt ist.

3. Ventil nach irgendeinem der vorhergehenden Ansprüche, in welchem das flexible Element (2) eine Hülse aufweist und das flexible Element (2) vorzugsweise aus Gummi oder aus einem synthetischen Kunststoffmaterial hergestellt ist.

4. Ventil nach irgendeinem der vorhergehenden Ansprüche, wobei die innere Oberfläche des flexiblen Elementes (2) mit einer klebrig machenden Beschichtung versehen ist.

5. Ventil nach irgendeinem der vorhergehenden Ansprüche, in welchem die Mittel zur Ermöglichung einer Verbindung von Einlass und Auslass jeweilige Bohrungen aufweisen, welche den Einlass (3) und den Auslass (4) mit der Oberfläche des Ventilkörpers (1) verbinden.

6. Ventil nach irgendeinem der vorhergehenden Ansprüche, in welchem Mittel (8, 9) zum Zurückhalten des flexiblen Elementes (2) auf dem Ventilkörper (1) vorgesehen sind, wobei die Mittel vorzugsweise ringförmige Ausbildungen auf dem Ventilkörper (1) aufweisen.

7. Vorrichtung, welche ein Ventil nach irgendeinem der vorhergehenden Ansprüche enthält.

8. Vorrichtung nach Anspruch 7, welche unter Druck setzbar ist, wobei vorzugsweise der Druck in der Vorrichtung durch eine manuelle Pumpe erzeugt wird.

9. Vorrichtung nach Anspruch 7, welche einen unter Druck gesetzten Behälter aufweist, wobei die Vorrichtung vorzugsweise eine gepulste Ausgabe der Inhalte des unter Druck gesetzten Behälters bereitstellt.

10. Vorrichtung (14) aufweisend eine erste Kammer (16), welche eine unter Druck gesetzte Treibmittel-Flüssigkeit (18) enthält und eine zweite Kammer (20), welche ein Material (22) in Flüssigform enthält, das von der Vorrichtung in zerstäubter Form auszugeben ist, wobei es eine beschränkte Verbindung (24) zwischen den Kammern derart gibt, dass das Treibmittel in die zweite Kammer ausströmen kann und wobei ein Ventil (3), das eine zeitweilige Verbindung zwischen der zweiten Kammer und dem Äußeren der Vorrichtung bereitstellt, Impulse des Materials ausgibt, wenn einmal das Treibmittel den Druck innerhalb der zweiten Kammer auf eine Grenzwerthöhe angehoben hat, die erforderlich ist, um das Ventil auszulösen, **dadurch gekennzeichnet, dass** das Ventil wie nach irgendeinem der Ansprüche 1 bis 6 beansprucht, ausgestaltet ist.

## Revendications

1. Soupape comprenant un corps de soupape (1) et un élément souple (2) entourant le corps de soupape, le corps de soupape définissant une entrée (3) et une sortie (4) ainsi qu'un moyen destiné à permettre à l'entrée (3) et à la sortie (4) de communiquer et à l'élément souple (2) de pouvoir être déplacé sous l'action de la pression dans l'entrée (3) d'une position fermée à laquelle la communication entre l'entrée (3) et la sortie (4) est empêchée à une position ouverte dans laquelle la communication entre l'entrée (3) et la sortie (4) est permise, **caractérisée en ce que** la surface intérieure de l'élément souple (2) est collante de sorte qu'elle adhère au corps de soupape (1) de façon à augmenter la force requise pour déplacer l'élément souple (2) de la position fermée à la position ouverte, la force à laquelle l'élément souple (2) revient à sa position fermée étant inchangée, et/ou **en ce que** l'élément souple (2) est constitué d'un matériau qui nécessite une force plus grande pour le déplacer depuis la position fermée que la force que peut exercer l'élément souple (2) par élasticité pour revenir à sa position fermée lorsque la force de déplacement est supprimée.

2. Soupape selon la revendication 1, dans laquelle le corps de soupape (1) est moulé à partir de matière plastique synthétique ou le corps de soupape (1) est réalisé à partir d'acier.

3. Soupape selon l'une quelconque des revendications précédentes, dans laquelle l'élément souple (2) comprend un manchon, et l'élément souple (2) est de préférence réalisé à partir de caoutchouc ou bien à partir d'une matière plastique synthétique.

4. Soupape selon l'une quelconque des revendications précédentes, dans laquelle la surface intérieure de l'élément souple (2) est munie d'un revêtement qui confère une pégosité.

5. Soupape selon l'une quelconque des revendications précédentes, dans laquelle le moyen destiné à permettre à l'entrée et à la sortie de communiquer comprend des alésages reliant respectivement l'entrée (3) et la sortie (4) avec la surface du corps de soupape (1).

6. Soupape selon l'une quelconque des revendications précédentes, dans laquelle un moyen (8, 9) est prévu pour retenir l'élément souple (2) sur le corps de soupape (1), le moyen comprenant de préférence des formations annulaires sur le corps de soupape (1).

7. Dispositif incorporant une soupape selon l'une quelconque des revendications précédentes.

8. Dispositif selon la revendication 7, qui peut être mis sous pression, de préférence dans lequel la pression dans le dispositif est générée au moyen d'une pompe manuelle.

9. Dispositif selon la revendication 7, qui a un récipient sous pression, de préférence le dispositif fournissant une libération par impulsion du contenu du récipient sous pression.

10. Dispositif (14) comprenant une première chambre (16) contenant un agent propulseur liquide mis sous pression (18) et une seconde chambre (20) contenant un matériau sous forme liquide (22) à fournir depuis le dispositif sous une forme dispersée, où il existe une communication restreinte (24) entre les chambres, de sorte que l'agent propulseur puisse s'écouler dans la seconde chambre et où une soupape (3) permettant une communication par intermittence entre la seconde chambre et l'extérieur du dispositif, fournit une impulsion dudit matériau une fois que l'agent propulseur a élevé la pression à l'intérieur de la seconde chambre à un niveau de seuil requis pour mettre en oeuvre la soupape, **caractérisé en ce que** la soupape est telle que revendiquée dans l'une quelconque des revendications 1 à 6.
